# EUROPEAN PATENT APPLICATION

(11) **EP 2 801 890 A1**
(43) Date of publication of application: **12.11.2014**
(21) Application number: 14167110.7
(22) Date of filing: 06.05.2014
(51) Int. Cl.: G06F 3/01, G06F 3/16, G06F 3/0485, G10L 15/24

(54) **Method and apparatus for selecting an object on a screen**

(30) Priority: 07.05.2013 KR 20130051555
(71) Applicant: Samsung Electronics Co., Ltd, Gyeonggi-do 443-742 (KR)
(72) Inventor: Kwon, Sung-hyuk, Gyeonggi-do (KR); Kim, Jae-yeop, Seoul (KR); Lee, Jin-ha, Seoul (KR); Naourjean, Christophe, Gyeonggi-do (KR)
(74) Representative: Bray, Richard Anthony

(57) **Abstract**

Provided herein is a method for selecting an object. The method for selecting an object according to an exemplary embodiment includes displaying a plurality of objects on a screen, recognizing a voice uttered by a user and tracking an eye of the user with respect to the screen, and selecting at least one object from among the plurality of objects on the screen based on the recognized user's voice and the tracked eye.

## Description

### CROSS-REFERENCE TO RELATED APPLICATION

This application claims priority from Korean Patent Application No. 2013-0051555, filed in the Korean Intellectual Property Office on May 7, 2013, the disclosure of which is incorporated herein by reference in its entirety.

### BACKGROUND

### 1. Field

Methods and apparatuses consistent with exemplary embodiments relate to a method for selecting an object, and more particularly, to a method for selecting an object using voice recognition and eye tracking, and an apparatus thereof.

### 2. Description of the Related Art

Recent interface technologies have begun to reflect more intuitive user experiences. For example, a user may touch an item displayed on a screen thereby selecting the item without having to manipulate an additional input apparatus such as a keyboard, mouse, etc. Another example consists of the user being able to select a television (TV) program by using only a hand gesture. Further, some artificial intelligence technologies may be applied to interfaces such as voice recognition or eye tracking, etc.

Voice recognition refers to a technology that works by collecting a human voice and identifying its linguistic meaning. Voice recognition technology may be regarded as a very intuitive and innovative interface technology in that a user performs interaction with electronic apparatuses or mechanical apparatuses using natural language. However, human languages have different expressions depending on not only the formal structure of sentences but also nuisances or contexts etc. Thus, there may be some difficulty in interpreting the exact meaning of the language using mechanical coordination. This is also due to an inherent issue of the natural languages. For example, the level of understanding of a counterpart's language may differ according to the utterance characteristics of the person.

Eye tracking is a technology consisting of sensing a user's eye and may include identifying information that the user visually recognizes (that is, information located in a gaze position). A normal person's eye changes quickly and moves according to various stimuli in the view. Therefore, in the case of using eye tracking technology as an interface, efforts are made to fixate an eye to a certain point for a minimum period of time, and thus the fatigue of the eye increases. Even based on user's experience in a normal communication, eye may only perform a subsidiary role, and thus it may be difficult for eye tracking to be used as a complete tool for communication.

Consequently, human communication may be made by combining eye movement, language, and gestures, etc., thereby delivering one's intension to the counterpart. Thus, it may be useful to design an interface considering such user experiences.

### SUMMARY

Exemplary embodiments provide a method for selecting an object more precisely using voice recognition and eye tracking, and an apparatus thereof.

According to an aspect of an exemplary embodiment, there is provided a method for selecting an object, the method including displaying a plurality of objects on a screen, recognizing a voice uttered by a user, tracking an eye of the user with respect to the screen; and selecting at least one object from among the plurality of objects on the screen based on the recognized voice and the tracked eye.

The selecting may include identifying the at least one object matching the recognized voice from among the plurality of objects on the screen, and selecting the at least one object in response to the at least one object being located in an area on the screen matching the tracked eye.

The selecting may include searching for at least one text matching the recognized voice and displaying the at least one text in an area on the screen, and selecting at least one text located in the area on the screen matching the tracked eye from among the at least one displayed text.

The selecting may include displaying, on the screen, at least one object having tag information matching the recognized voice, and selecting the at least one object in response to the at least one object being located in an area on the screen matching the tracked eye.

The selecting may include selecting an area on the screen matching the tracked eye, and selecting the at least one object matching the recognized voice in the selected area on the screen.

The selecting may include displaying the at least one object on an area of the screen matching the tracked eye, and selecting an object matching the recognized user's voice from among the at least one displayed object.

The selecting may include displaying the at least one object on an area of the screen matching the tracked eye, and selecting at least one object having tag information matching the recognized voice from among the at least one displayed object.

The displaying may include tracking a movement of the eye with respect to the screen, and scrolling the screen along a direction in which the eye moved in response to a determination that the tracked eye has deviated from the screen. The selecting includes selecting at least one object matching the recognized voice from among the at least one object displayed on an area of the screen corresponding to a track along which the eye moved.

The method may further include sensing and recognizing a movement of the user, and selecting at least one object from among the at least one object selected based on the recognized voice, the tracked eye, and the recognized movement.

The object may be at least one of an application icon, a content icon, a thumbnail image, a folder icon, a widget, a list item, a hyperlink, a text, a flash object, a menu, and a content image.

According to an aspect of another exemplary embodiment, there is provided an apparatus for selecting an object, the apparatus including a displayer configured to display a plurality of objects on a screen, an eye tracker configured to track an eye of a user with respect to the screen, a voice recognizer configured to recognize a voice uttered by the user, and a controller configured to select at least one object from among the plurality of objects on the screen based on the recognized voice and the tracked eye.

The controller may identify at least one object matching the recognized voice from among the plurality of objects on the screen, and selects the at least one object in response to the at least one object being located in an area on the screen matching the tracked eye.

The controller my search for at least one text matching the recognized voice and displays the at least one text in an area on the screen, and selects at least one text located in the area on the screen matching tracked eye from among the at least one displayed text

The controller may display, on the screen, at least one object having tag information matching the recognized voice, and selects the at least one object in response to the at least one object being located in an area on the screen matching the tracked eye.

The controller may select an area on the screen matching the tracked eye, and selects the at least one object matching the recognized voice in the selected area on the screen.

The controller may display the at least one object on the area of the screen matching the tracked eye, and selects an object matching the recognized user's voice from among the at least one displayed object.

The controller may display the at least one object on an area of the screen matching the tracked eye, and selects at least one object having tag information matching the recognized voice from among the at least one displayed object.

The controller may track a movement of the eye with respect to the screen, and scrolls the screen along a direction in which the eye moved in response to a determination that the tracked eye has deviated from the screen, and select at least one object matching the recognized voice from among the at least one object displayed on the area of the screen corresponding to a track along which the eye moved.

The apparatus may further include a motion sensor configured to sense and recognize a movement of the user, wherein the controller selects at least one object from among the at least one object selected based on the recognized voice, the tracked eye, and the recognized movement.

The object is at least one of an application icon, a content icon, a thumbnail image, a folder icon, a widget, a list item, a hyperlink, a text, a flash object, a menu, and a content image.

### BRIEF DESCRIPTION OF THE DRAWINGS

The above and/or other aspects will be more apparent by describing certain exemplary embodiments with reference to the accompanying drawings, in which:
FIG. 1 is a block diagram illustrating a configuration of an apparatus for selecting an object according to an exemplary embodiment;
FIG. 2 is a view illustrating a display screen according to an exemplary embodiment;
FIG. 3 is a view illustrating a display screen according to another exemplary embodiment;
FIGs. 4A through 4D are views illustrating a display screen according to one or more exemplary embodiments; and
FIGs. 5 to 9 are flowcharts of a method for selecting an object according to one or more exemplary embodiments.

### DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a particular order. In addition, respective descriptions of well-known functions and constructions may be omitted for increased clarity and conciseness.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. The scope is defined not by the detailed description but by the appended claims. Like numerals denote like elements throughout.

The term "module" as used herein means, but is not limited to, a software or hardware component, such as an FPGA or ASIC, which performs certain tasks. A module may advantageously be configured to reside on an addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Although the terms used herein are generic terms which are currently widely used and are selected by taking into consideration functions thereof, the meanings of the terms may vary according to the intentions of persons skilled in the art, legal precedents, or the emergence of new technologies. Furthermore, some specific terms may be randomly selected by the applicant, in which case the meanings of the terms may be specifically defined in the description of the exemplary embodiment. Thus, the terms should be defined not by simple appellations thereof but based on the meanings thereof and the context of the description of the exemplary embodiment. As used herein, expressions such as "at least one of," when preceding a list of elements, modify the entire list of elements and do not modify the individual elements of the list.

It will be understood that when the terms "includes," "comprises," "including," and/or "comprising," when used in this specification, specify the presence of stated elements and/or components, but do not preclude the presence or addition of one or more elements and/or components thereof. As used herein, the term "module" refers to a unit that can perform at least one function or operation and may be implemented utilizing any form of hardware, software, or a combination thereof.

A configuration and operations of an apparatus for selecting an object will now be described.

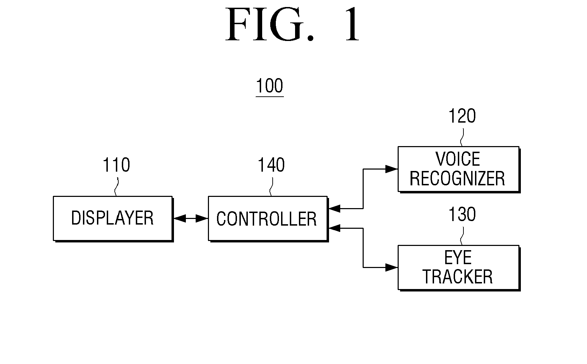

FIG. 1 is a block diagram illustrating a configuration of an apparatus for selecting an object according to an exemplary embodiment.

With reference to FIG. 1, an apparatus for selecting an object according to an exemplary embodiment may include a displayer 110, a voice recognizer 120, an eye tracker 130, and a controller 140.

The displayer 110 may be configured to display a plurality of objects on a screen. The screen may be an area where an image is displayed by a display panel. In addition, an object may refer to an image included in an image displayed on the screen and is thus identifiable with one's eye, and which also corresponds to a certain function or content. The displayer 110 may display one image corresponding to the screen, where the one image includes a plurality of objects.

There is almost no limitation as to the type of an object. For example, an object may be any one of an application icon, content icon, thumbnail image, folder icon, widget, list item, hyperlink, text, flash object, menu and image or video content.

The application icon may be an icon for executing an application included in a display apparatus 100, for example, selecting a corresponding image. The content icon may be an icon for reproducing content such as selecting and displaying a corresponding image. The thumbnail image is an image which has been reduced to a small size and displayed so as to be viewed at once. It may be an object that may be expanded to a full size or that displays information related to the image, when selected. The folder icon is an icon that may display a file inside a folder when a corresponding icon image is selected. The widget is an icon that may provide a user interface for direct execution without having to select various steps of menus, and the list item is a configuration for displaying a file in a list format. The hyperlink is an object that displays connected elements when it is selected as an object for connecting various elements in a hypertext document. It is a configuration for displaying a selectable menu.

The displayer 110 may have a configuration similar to a conventional display apparatus, and may operate in a similar manner as a conventional display apparatus. The displayer 110 may process and configure an image to be displayed. To this end, the displayer 110 may include a signal processing module. The signal processing module may include at least one of an A/V decoder (not illustrated), a scaler (not illustrated), a frame rate converter (not illustrate) and a video enhancer (not illustrated). The A/V decoder may be used to separate audio data from video data and decode the same, and the scaler may adjust a screen proportion of the image where an object is displayed. In addition, the video enhancer may remove deterioration or noise of an image, store the processed image in a frame buffer, and transmit the stored image to a display module according to the frequency set by the frame rate converter.

The display module may have a circuit configuration for outputting an image in a display panel (not illustrate), and may include a timing controller (not illustrated), a gate driver(not illustrated), a data driver(not illustrated), and a voltage driver(not illustrated).

The timing controller may create a gate control signal (injection control signal) and data control signal (data signal), and may re-align the input RGB data and may supply the realigned data to a data driver (not illustrated).

A gate driver may apply a gate on/off voltage (Vgh/Vgl) provided from a voltage driver to a display panel according to a gate control signal created by a timing controller.

The data driver may complete scaling according to a data control signal created by a timing controller and may input RGB data of an image frame into a display panel.

The voltage driver (not illustrate) may create and deliver driving voltage for each of the gate driver, data driver, and display panel etc.

The aforementioned display panel may be designed in various technologies. That is, a display panel may be configured to be one of an Organic Light Emitting Diodes (OLED), Liquid Crystal Display Panel (LCD), Plasma Display Panel (PDP), Vacuum Fluorescent Display (VFD), Field Emission Display (FED), and Electro Luminescence Display (ELD). The display panel will be configured to be of an illuminance type, but a light reflection type display (E-ink, P-ink, Photonic Crystal) is not excluded either. In addition, it may be embodied in a flexible display, or a transparent display etc. Furthermore, a method for selecting an object 100 may be embodied in a multi-display apparatus having two or more display panels.

The voice recognizer 120 may be configured to recognize a voice uttered by a user. The voice recognizer 120 may include a voice collector and a voice analyzer(not illustrated).

The voice collector may be configured to collect a voice uttered by a user. Collecting a voice may be performed by a conventional microphone. For example, collecting a voice may be performed by at least one microphone from among a dynamic microphone, condenser microphone, piezoelectric microphone configured to use the piezoelectric phenomenon, carbon microphone configured to use contact resistance of carbon particles, pressure microphone configured to generate a capacity proportionate to a negative particle speed. The user may be a distance away from the display screen, and thus the voice collector may be provided in an apparatus separated from the apparatus for selecting an object 100. The voice collector transmits the collected voice information to the voice analyzer.

The voice analyzer may receive the collected voice information, and may recognize the received voice information and convert it into a text. More specifically, the voice analyzer may use a STT (Speech to Text) engine to create text information corresponding to the user's voice. Herein, the STT engine is a module for converting a voice signal into text. It may convert a voice signal into text using various STT algorithms.

For example, the STT engine may detect a start and an end point of a voice uttered by a user in the collected user's voice and determines a voice section. Specifically, the STT engine may calculate an energy of the received voice signal, classify the energy level of the voice signal according to the calculated energy, and detect a voice section through dynamic programming. In addition, the STT engine may detect a phoneme, which is the minimum unit of a voice based on an acoustic module, inside the detected voice section to create phoneme data, and may apply an HMM(Hidden Markov Model) probability model to the created phoneme data and convert the user's voice into text.

In addition, the voice analyzer may extract characteristics that the user's voice has from the collected voice. Characteristics of a voice may include any one of at least the expression style, accent, and height etc. of the user's voice. The characteristics of a voice may be extracted from the frequency, amplitude, and phase of the collected voice. Parameters that express the characteristics of a voice may include at least energy, zero crossing rate (ZCR), pitch, and formant etc. The linear prediction method (LPC) for modeling a person's vocal tracts, and the filter bank method for modeling a person's auditory organ may be implemented for extracting characteristics of a voice for voice recognition. The LPC method uses a method for analyzing in time zones, and thus the amount of calculation is small and shows very excellent recognition performance, but the LPC method recognition performance is significantly reduced in noisy environments. For the method of voice recognition in noisy environments, a method for modeling a person's auditory organ in a filter bank may be used. For example an MFCC (that is, Mel Frequency Cepstrum Coefficient, MFCC) based on a Mel-scale filter bank may be used as the method for extracting voice characteristics. The LPC method may use a method for analyzing in time zones, and thus the amount of calculation is small, and shows very excellent recognition performance in quiet environments, but according to research on recognition sound psychology in noisy environments, it has been found that the relationship between the pitch of a physical frequency and a subjective frequency that humans recognize is not linear, and thus 'Mel' is used which defines the frequency scale that humans subjectively feel differently from the physical frequency that is expressed in 'Hz'. These voice characteristics may be used to remove noise of voice recognition.

The eye tracker 130 may configured to track a user's eye regarding a screen. The eye tracker 130 may track a user's eye using various eye tracking technologies (eye tracking, gaze tracking). For example, it may be embodied in any one of a method based on skin electrodes, method based on contact lens, method based on head mounted display attachment, and method based on remote pan & tilting apparatus.

The method based on skin electrodes is a method where an electrode is attached near a user's eye to measure a potential difference between a retina and cornea and to calculate a gazing location through the measured potential difference. The method based on skin electrode may apprehend all the gazing locations in both eyes, costs less, and is easy to use. However, the method based on skin electrode has limited movements in horizontal and vertical directions, and thus may not be as accurate.

The method based on contact lens is a method where a non-slippery lens is attached to a cornea and magnetic field coil or mirror is attached thereto to measure the gazing location. Using this method based on contact lens, it is possible to calculate the exact gazing location. However, such a method is inconvenient, and may not be comfortable for the user to flicker one's eyes, and the calculable range is limited.

The method based on head mounted display attachment calculates a gazing location using a small camera mounted underneath a headband or helmet. Using the method based on head mounted display attachment, it is possible to calculate a gazing location regardless of the movement of the user's head. However, the camera is inclined below the user's eye-level, and thus is not sensitive to up and down movements, and is only applied to a head mounted display.

The method based on remote pan & tilted apparatus is a method where a camera and lighting may be pan & tilted near a monitor and are mounted to calculate a gazing location. The method based on remote pan & tilt apparatus may be capable of quickly calculating exact gazing locations and is easy to apply, but to track a head movement, there may be a need for two or more expensive stereo camera apparatuses and complicated algorithms, and an additional display apparatus for displaying an object.

In addition, there is a method for using a camera attached to a wearable glasses apparatus to calculate a gazing location. In this case, the eye tracker 130 becomes a configuration of the glasses apparatus, and an additional display apparatus capable of displaying an object. The glasses apparatus may be comfortable to wear and may be configured with simplicity without requiring a high performance hardware.

The controller 140 may control the overall operations of the apparatus for selecting an object 100. The controller 140 may include a hardware configuration such as a CPU and cache memory and a software configuration of applications having certain purposes. According to a system check, a control command regarding each configurative element for operating the apparatus for selecting an object 100 is read from the memory, and according to the read control command, electric signals are generated to operate each configured element.

The controller 140 may select at least one object from among a plurality of objects on the screen based on the recognized voice and tracked eye.

Exemplary embodiments of eye tracking after voice recognition are described below.

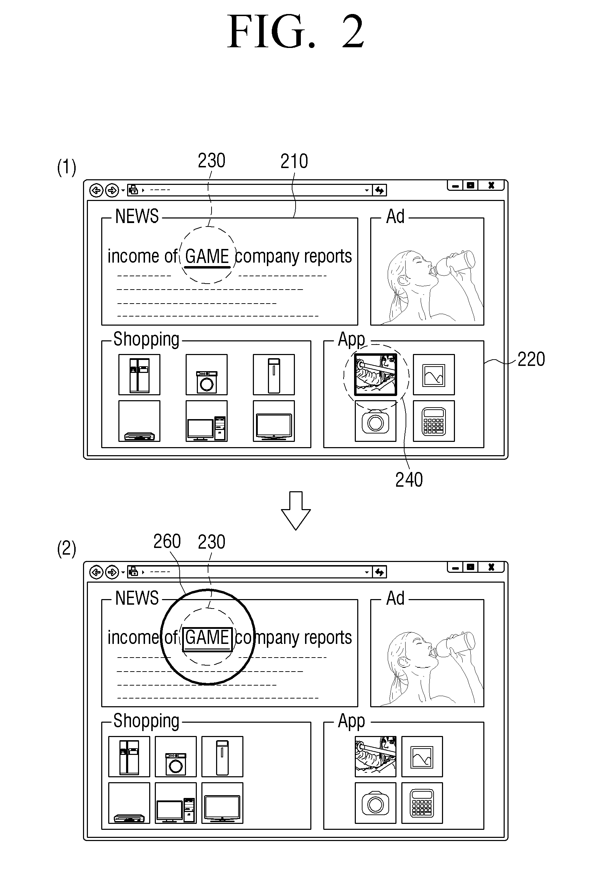

FIG. 2 is a view illustrating a display screen according to an exemplary embodiment.

The controller 140, according to an exemplary embodiment, may select at least one object matching the recognized user's voice from among the plurality of objects on the screen, and may select at least one object located in an area on the screen matching the tracked user's eye from among the at least one selected object.

For example, in the case where the user uttered "game" on the screen where a web page is displayed in the exemplary embodiment of FIG. 2, the voice recognizer 120 collects the game, and the STT module is converted into a text. The controller 140 may search at least one object matching the text on the web page and may distinctively display the searched object. That is, the controller 140 searches and highlights the term 230, 'game' from among the text in the news section 210 of the web page, and highlights and displays an application icon 240 included in the 'game' category from among the application icons placed in the application section 220. (view (1) of FIG. 2)

In addition, from among the 'game' objects highlighted and selected as aforementioned, the controller 140 may select the term 230 'game' located in one portion of the news section 210 which is an area 260, which is also known as a gaze area, on the screen matching the tracked user eye, and may then highlight and display the selected term 230. (view (2) of FIG. 2)

In another exemplary embodiment, the controller 140 may distinctively display at least one object having tag information matching the recognized user voice on the screen. For example, in the case where the user uttered "zombie", from among the objects displayed on the screen, an object having "zombie" as the tag may be selected. That is, a zombie related game, notice, zombie clothing, zombie mask, zombie movie etc. may be selected and displayed.

FIG. 2 shows an exemplary embodiment where a web page is displayed and an object is selected on the web page, but this is merely an exemplary embodiment. That is, it would be possible select an object in the aforementioned method with at least one of the various the aforementioned various types of objects, that is an application icon, content icon, thumbnail image, folder icon, widget, list item, hyperlink, text, flash object, menu and contents image displayed.

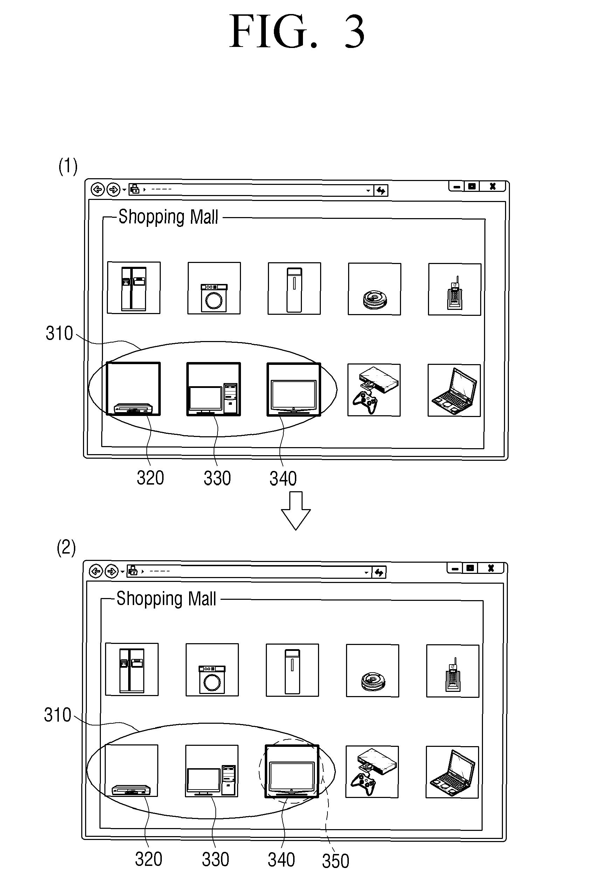

FIG. 3 is a view illustrating a display screen according to another exemplary embodiment.

The controller 140 according to another exemplary embodiment may select an area on the screen matching the tracked user's eye, and then select at least one object matching the recognized user's voice in the selected area on the screen.

FIG. 3 illustrates a scenario for selecting an item in a shopping mall. The user's eye is located in an area 310, also known as a gaze area, in a lower left portion of the screen, and thus the items 320, 330, 340 of the corresponding area are distinctively displayed according to the tracking result of the user's eye (view (1) of FIG. 3).

Next, in the case where the user uttered "thing at the right end", the voice recognizer 120 collects what the user uttered, and the STT module converts the speech into text. The controller 140 determines the conditions matching the linguistic phrase "thing at the right end". For example, the meaning of the linguistic phrase indicates the 3rd item from among the three items initially selected, and the linguistic phrase may match the terms "third", "last", and "right". The terms matched as such are determined as conditions, and the controller 140 selects the item 240 at the most right side from among the three items 320, 330, 340 based on the conditions (view (2) of FIG. 3). The selected item 340 may be displayed distinctively compared to other items.

In addition, similar to the aforementioned exemplary embodiment, the controller 140 may distinctively display at least one object displayed on an area of the screen matching the tracked user's eye, and may select at least one object having tag information matching the recognized user's voice from among the at least one displayed object.

For example, assuming a user uttered "red color" after an object is distinctively displayed by the user's eye, the controller 140 searches an object having "red color" as a tag from among the objects displayed on the screen. In an exemplary embodiment of a shopping mall, red color clothes, red color shoes, red color underwear, red color automobile, and red color others etc. may be selected and distinctively displayed.

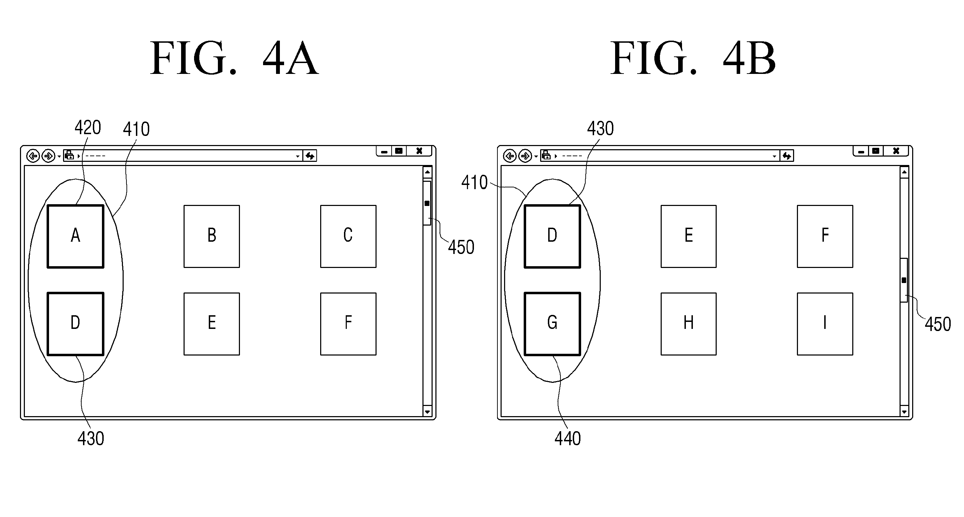

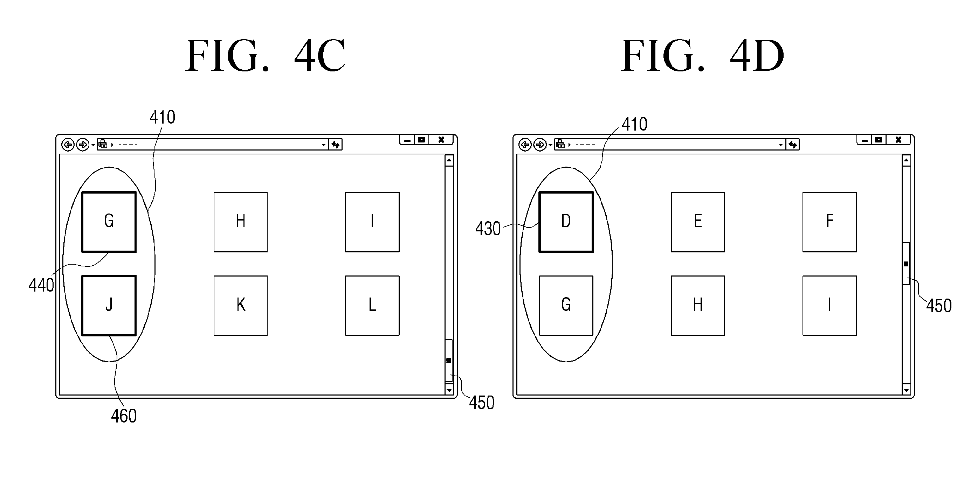

The eye tracker 130 may operate in real time, in which case it is possible to track a movement of the user's eye regarding the screen. FIGs. 4A through 4D illustrate an exemplary embodiment of such a case.

That is, FIGs. 4A through 4D are views illustrating a display screen according to another exemplary embodiment.

In the case where the eye tracker 130 detects a movement of the user's eye, in real time regarding the screen by tracking the user's eye regarding the screen, at the moment when the tracked user's eye deviates from the screen, the controller 140 may scroll the screen along the direction in which the user's eye moved. The controller 140 may determine a deviation of the eye when it is sensed that the user's eye, which used to remain on the screen, moved by or more than a predetermined distance on the screen or that an eye moved for more than a predetermined time and then the eye is placed over a corner of the screen.

When a voice uttered by the user is recognized, the controller 140 may select at least one object matching the recognized user's voice from among at least one object displayed on an area on the screen corresponding to the track that the user's eye moved, when a voice is uttered by the user.

In the exemplary embodiment of FIGs. 4A through 4D, as the user's eye is located at the left of the screen, items A and D located in the left are distinctively displayed (FIG. 4A). In addition, when it is sensed that the user's eye moved to a lower left portion of the screen, the controller 140 scrolls the screen in a downward direction. Herein, items A, D, G, J located in the track of movement of the user's eye are all selected and distinctively displayed (FIGs. 4A -4C). When the user uttered a particular item "D", the voice recognizer 120 recognizes this, and the controller 140 selects D from among the selected items A, D, G, J, and scrolls so that D may be displayed on the screen (FIG. 4D).

An exemplary embodiment of motion sensing is described below.

The apparatus for selecting an object 100 may further include a motion sensor configured to sense and recognize the user's operations.

The motion sensor is configured to recognize a motion of the user object. More specifically, the motion sensor senses the user's movement and recognizes what kind of motion has been made.

To this end, the motion sensor may include a photographing means such as a camera. The motion sensor photographs a user existing within a photographing range of the photographing means, analyzes its photograph image data, recognizes what kind of movement the user has made, and provides the result to the controller 140.

A camera on a front surface for photographing in a front direction for selecting an object 100 may be included as a photographing means. The camera receives light reflected from various objects placed in the front direction and creates photographed image data. When a motion in the direction of the apparatus for selecting an object 100 needs to be recognized, a three-dimensional depth camera may be included. The three-dimensional depth camera may emit an infrared ray, and may then measure the time it takes for the infrared ray to touch the object and to reflect back thus providing a way to calculate the distance to the object. An image obtained from the depth camera is output in a gray level, and a coordinate value such as width, height, distance is expressed for each pixel. Accordingly, photograph image data is created where depth information is provided.

The controller 140 may analyze the photograph image data and recognize a movement of the user object. In the case of a three-dimensional movement recognition, the controller may search a pixel group corresponding to the user object, and determine whether or not the depth information of the corresponding pixel group has changed. In this case, the controller 140 may distinguish the case where the distance from the object increases from the case where the distance from the distance gets decreases.

Herein, the controller 140 may select at least one object from among the at least one object selected based on the recognized voice and tracked eye based on the recognized user operation. According to such an exemplary embodiment, it may be possible to perform a user input more precisely similar to using gestures to improve the precision of communications in the real world.

A system for selecting an object is described below.

According to the configuration of the aforementioned apparatus for selecting an object 100, one apparatus may include all the configurations, but, according to another exemplary embodiment, a plurality of apparatuses may divide up the roles.

That is, as aforementioned, the apparatus for selecting an object 100 may be embodied in at least one of a method based on skin electrodes, a method based on contact lens, a method based on head mounted display attachment, a method based on remote pan & tilting apparatus, and a method based on glasses apparatus etc., in which case the apparatus may be designed to consist of a plurality of apparatuses.

According to an exemplary embodiment, in a method based on glasses apparatus, the glasses apparatus may include a camera for photographing movement of a pupil and a voice collector for collecting a user's voice. The collected user's voice and image photographed by the camera may be transmitted to a display apparatus by a short-distance communication means.

The aforementioned short-distance communication technology is not limited to a certain technology. For example, it may comply with the Wi-Fi communication standard.

A Wi-Fi module performs a short-distance communication which complies with the IEEE 802.11 technology standard. According to the IEEE 803.11 technology, the wireless communication technology of a band spread method which is called the DSSS (Single Carrier Direct Sequence Spread Spectrum) and the wireless communication technology of an orthogonal frequency division method which is called OFDM (Multi Carrier Orthogonal Frequency Multiplexing) are used.

Otherwise, it may be embodied in other various mobile communication technologies according to other exemplary embodiments. That is, a cellular communication module capable of data transceiving using a conventional wireless telephone network may be included.

For example, the 3G (3rd generation) mobile communication technology may be applied. That is, at least one of WCDMA (Wideband CDMA), HSDPA(High Speed Downlink Packet Access), HSUPA(High Speed Uplink Packet Access) and HSPA(High Speed Packet Access) may be applied.

The 4G (4th generation) mobile communication technology may be applied as well. 2.3GHz (portable internet) mobile WiMAX, or WiBro are internet technologies that may be used even when moving at a high speed.

In addition, the 4G LTE (Long Term Evolution) technology may be applied. LTE is an expanded technology of WCDMA. It is based on OFDMA (Orthogonal Frequency Division Multiple Access) and MIMO(Multiple-Input Multiple-Output) technologies. Because it utilizes WCDMA, there is an advantage of using a conventional network.

As aforementioned, it is possible to use WiMAX, Wi-Fi, 3G and LTE etc. having broad bandwidths and high efficiency, but the amount of data transmission is not that much in the present exemplary embodiment, and thus more efficient and less expensive technologies may be utilized. That is, other short-distance communication modules such as the Bluetooth module, infrared data association (IrDA) module, Near Field Communication (NFC) module, and Zigbee module etc. and wireless LAN modules may be applied.

According to other exemplary embodiments, the voice recognizer 120 and motion recognizer may be included in a remote control of the display apparatus. In this case, the user transmits a voice command to the display apparatus through a microphone installed in the remote control, and a motion sensor included in the remote control senses the user's motion and transmits the sensed signal to the display apparatus. On the other hand, the eye tracker 130 is included in the display apparatus, and the camera of the display apparatus photographs the user's eyes and tracks the eye.

The display apparatus may have one or more displays, and is an apparatus configured to execute an application or display content. For example, the display apparatus may be embodied in at least one of a digital television, table PC, personal computer, portable multimedia player (PMP), personal digital assistant (PDA), smart phone, mobile phone, digital frame, digital signage, and kiosk etc.

Herein below is an explanation of a method for selecting an object according to various exemplary embodiments.

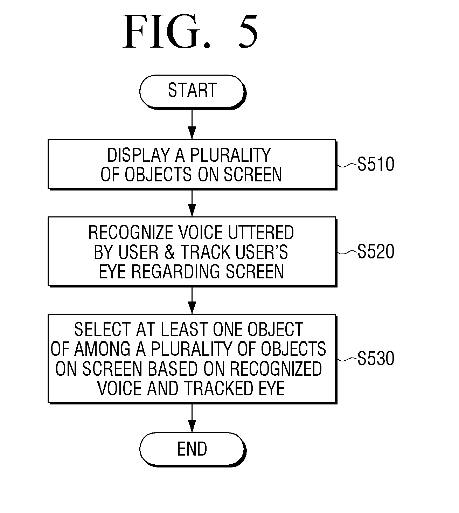

FIGs. 5 to 9 are flowcharts of a method for selecting an object according to various exemplary embodiments.

With reference to FIG. 5, a method for selecting an object includes displaying a plurality of objects on a screen (S510), recognizing a voice uttered by a user and tracking the user's eye regarding the screen (S520), and selecting at least one object from among the objects on the screen based on the recognized voice and tracked eye (S530).

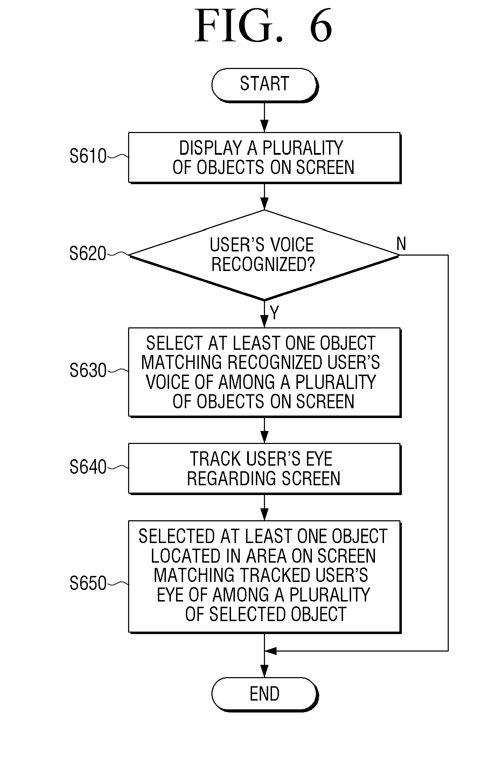

With reference to FIG. 6, a method for selecting an object displays a plurality of objects on a screen (S610), and when a voice uttered by the user is recognized (S620-Y), selects at least one object matching the recognized user's voice from among the plurality of objects on the screen (S630). In addition, the method tracks the user's eye regarding the screen (S640), and selects at least one object located in an area on the screen matching the tracked user's eye from among the at least one selected object (S650).

Herein, the selecting may include searching for text that matches the recognized user's voice and distinctively displaying the searched text on the screen, and selecting at least one text located in an area on the screen matching the tracked user's eye from among the at least one displayed text.

Furthermore, the selecting may include distinctively displaying at least one object having tag information matching the recognized user's voice on the screen, and selecting at least one object located in an area of the screen matching the tracked user's eye from among the at least one displayed object.

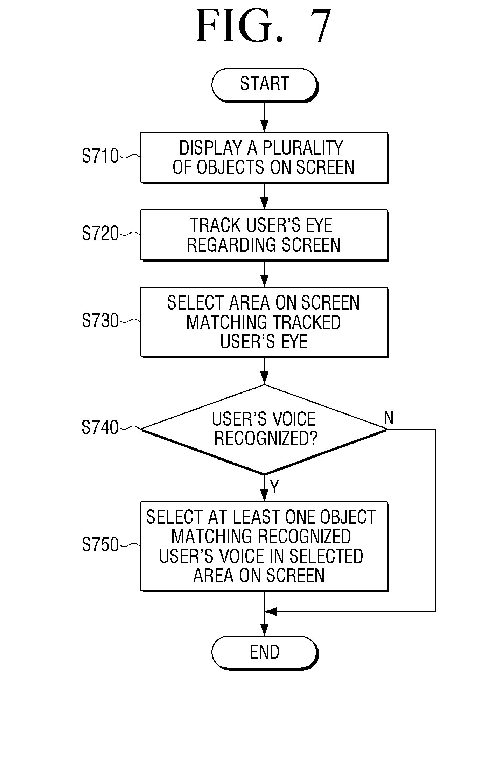

With reference to FIG. 7, a method for selecting an object displays a plurality of objects on the screen (S710), tracks a user's eye regarding the screen (S720), and selects an area on the screen matching the tracked user's eye (S730). In addition, when a voice uttered by the user is recognized (S740-Y), the method selects at least one object matching the recognized user's voice in the selected area on the screen (S750).

In addition, the selecting may include distinctively displaying at least one object displayed on an area on the screen matching the tracked user's eye, and selecting an object matching the recognized user's voice from among the at least one displayed object.

Furthermore, the selecting may include distinctively displaying at least one object displayed on an area on the screen matching the tracked user's eye and selecting at least one object having tag information matching the recognized user's voice from among the at least one displayed object.

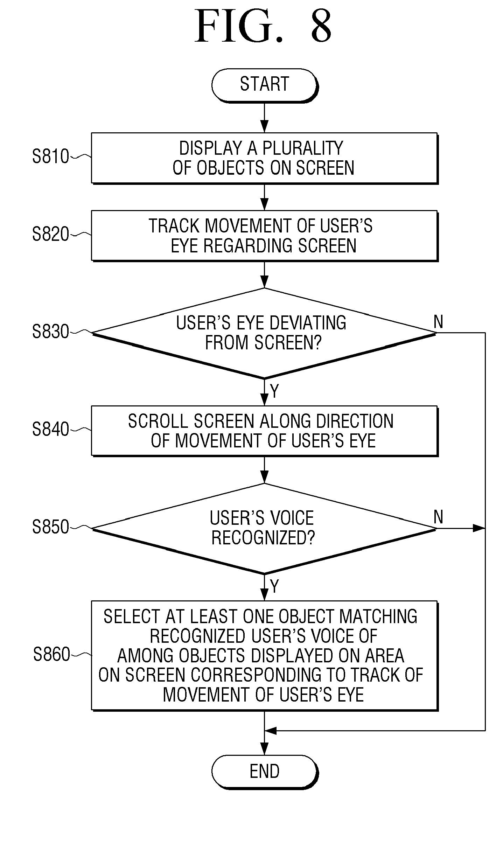

With reference to FIG. 8, a method for selecting an object displays a plurality of objects on the screen (S810), tracks a user's eye regarding the screen (S820), and when the tracked user's eye deviates (S830-Y), scrolls the screen along a direction in which the user's eye moved (840), and when a user's voice is recognized (S850-Y), selects at least one object from among the at least one selected object based on the recognized voice and tracked eye based on the recognized user's motion (S860).

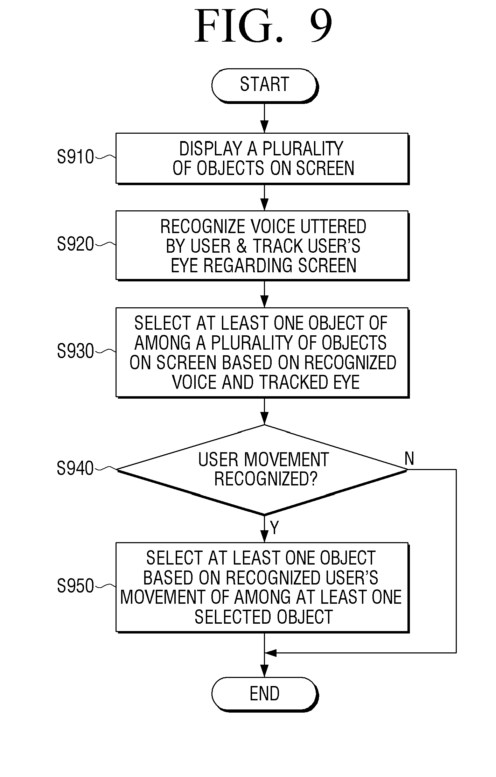

With reference to FIG. 9, a method for selecting an object displays a plurality of objects on a screen (S910), and recognizes a voice uttered by the user and tracks the user's eye regarding the screen (S920). In addition, the method selects at least one object from among the plurality of objects on the screen based on the recognized voice and tracked eye (S930). Next, when a user's movement is recognized (S940-Y), the method selects at least one object based on the recognized user's movement from among the at least one selected object (S950).

Herein, the object may be one of an application icon, contents icon, thumbnail image, folder icon, widget, list item, hyperlink, text, flash object, menu, and content image.

### Record medium

The aforementioned method for selecting an object may be embodied in a program including an algorithm executable in a computer, and the program may be stored in a non-transitory computer readable medium and be provided.

A non-transitory computer readable medium refers to a computer readable medium configured to semi-permanently store data and not temporarily such as a register, cache, and memory etc. More specifically, the aforementioned various applications or programs may be stored in a CD, DVD, hard disk, Blu-ray disk, USB, memory card, and ROM etc.

Although a few exemplary embodiments have been shown and described, it would be appreciated by those skilled in the art that changes may be made in these embodiments without departing from the principles and spirit of the inventive concept, the scope of which is defined in the claims and their equivalents.

## Claims

1. A method for selecting an object, the method comprising:
displaying a plurality of objects on a screen;
recognizing a voice uttered by a user;
tracking an eye of the user with respect to the screen; and
selecting at least one object from among the plurality of objects on the screen based on the recognized voice and the tracked eye.

2. The method according to claim 1, wherein the selecting comprises:
identifying the at least one object matching the recognized voice from among the plurality of objects on the screen; and
selecting the at least one object in response to the at least one object being located in an area on the screen matching the tracked eye.

3. The method according to claim 1, wherein the selecting comprises:
searching for at least one text matching the recognized voice and displaying the at least one text in an area on the screen; and
selecting at least one text located in the area on the screen matching the tracked eye from among the at least one displayed text.

4. The method according to claim 1, wherein the selecting comprises:
displaying, on the screen, at least one object having tag information matching the recognized voice; and
selecting the at least one object in response to the at least one object being located in an area on the screen matching the tracked eye.

5. The method according to claim 1, wherein the selecting comprises:
selecting an area on the screen matching the tracked eye; and
selecting the at least one object matching the recognized voice in the selected area on the screen.

6. The method according to claim 1, wherein the selecting comprises:
displaying the at least one object on an area of the screen matching the tracked eye; and
selecting an object matching the recognized voice from among the at least one displayed object.

7. The method according to claim 1, wherein the selecting comprises:
displaying at least one object displayed on an area on the screen matching the tracked eye; and
selecting at least one object having tag information matching the recognized voice from among the at least one displayed object.

8. The method according to claim 1 to 7,
wherein the displaying comprises:
tracking a movement of the eye regarding the screen; and
scrolling the screen along a direction in which the eye moved, when it is determined that the tracked eye deviated from the screen, and
wherein the selecting comprises selecting at least one object matching the recognized voice from among the at least one object displayed on an area on the screen corresponding to a track in which the eye moved.

9. The method according to claim 1 to 7, further comprising:
sensing and recognizing a movement of the user; and
selecting at least one object from among the at least one object selected based on the recognized voice, the tracked eye, and the recognized movement.

10. The method according to claim 1,
wherein the object is at least one of an application icon, a content icon, a thumbnail image, a folder icon, a widget, a list item, a hyperlink, a text, a flash object, a menu, and a content image.

11. An apparatus for selecting an object, the apparatus comprising:
a displayer configured to display a plurality of objects on a screen;
an eye tracker configured to track an eye of a user with respect to the screen;
a voice recognizer configured to recognize a voice uttered by the user; and
a controller configured to select at least one object from among the plurality of objects on the screen based on the recognized voice and the tracked eye.

12. The apparatus according to claim 11,
wherein the controller identifies at least one object matching the recognized voice from among the plurality of objects on the screen, and selects at least one object located in an area on the screen matching the tracked eye from among the at least one selected object.

13. The apparatus according to claim 11,
wherein the controller searches at least one text matching the recognized voice and displays the at least one text searched on the screen, and selects at least one text located in an area on the screen matching tracked eye from among the at least one displayed text

14. The apparatus according to claim 11,
wherein the controller displays, on the screen, at least one object having tag information matching the recognized voice, and selects at least one object located in an area on the screen matching the tracked eye from among the at least one displayed object

15. The apparatus according to claim 11,
wherein the controller selects an area on the screen matching the tracked eye, and selects the at least one object matching the recognized voice in the selected area on the screen
